# EUROPÄISCHE PATENTANMELDUNG

(11) **EP 2 055 627 A2**
(43) Veröffentlichungstag der Anmeldung: **06.05.2009**
(21) Anmeldenummer: 08170113.8
(22) Anmeldetag: 22.12.2005
(51) Int. Cl.: B63B 35/71, B63B 3/04, B63B 5/24

(54) **Verfahren zum Herstellen eines Bootskörpers eines Wassersportgeräts**

(30) Priorität: 30.12.2004 DE 102004063561
(62) Teilanmeldung aus: 05821514.6
(71) Anmelder: Richter, Günter, 57610 Altenkirchen (DE)
(72) Erfinder: Richter, Günter, 57610 Altenkirchen (DE)
(74) Vertreter: Schaumburg, Thoenes, Thurn, Landskron, Eckert

(57) **Zusammenfassung**

Die Erfindung betrifft ein Verfahren zum Herstellen eines Bootskörpers (10) eines Wassersportgerätes, bei dem ein um eine Einstiegsöffnung des Bootskörpers (10) vorgeformter umlaufender Rahmen (12) an einer Innenseite einer Negativform angeordnet wird. Die Außenform des Bootskörpers (10) ist im Wesentlichen durch die Innenseite der Negativform vorgegeben. Der Bootskörper (10) wird an der Innenseite der Form mit Hilfe eines thermoplastischen Formverfahrens erzeugt. Zumindest ein Teil der Oberfläche des umlaufenden Rahmens (12) wird während des Formvorgangs durch den mit Hilfe des thermoplastischen Formverfahrens gebildeten Bootskörper (10) berührt.

## Beschreibung

Die Erfindung betrifft ein Verfahren und eine Vorrichtung zum Herstellen eines Bootskörpers eines Wassersportgerätes. Der Bootskörper ist mit Hilfe eines thermoplastischen Formverfahrens hergestellt. Ferner betrifft die Erfindung ein Wassersportgerät.

Zahlreiche Kunststoffprodukte werden kostengünstig mit Hilfe von thermoplastischen Formverfahren, wie z.B. mit Hilfe eines Blasformverfahrens, eines Rotationsformverfahrens, eines Twinsheet-Formverfahrens oder eines Tiefziehformverfahrens, aus thermoplastischen Kunststoffen hergestellt. Ein Blasformverfahren hat gegenüber einem Rotationsformverfahren beispielsweise den Vorteil, dass es kostengünstiger durchzuführen ist und mit Hilfe des Blasformverfahrens bessere Materialeigenschaften des erzeugten blasgeformten Elements erzielbar sind. Jedoch können insbesondere bei Bootskörpern Öffnungen sowie Bereiche um Öffnungen herum nicht beliebig geformt werden. Dadurch können spezielle Anforderungen nicht immer zufrieden stellend erfüllt werden.

Ferner tritt das Problem auf, dass aufgrund der im Wesentlichen gleichmäßigen Wandstärke von thermoplastisch geformten Bootskörpern keine beliebig stabilen Bereiche im Bootskörper ausgebildet werden können. So müssen Bereiche, in denen eine relativ große Kraft in den Bootskörper eingeleitet wird, nachbearbeitet werden, indem in diesen Bereichen insbesondere zusätzliches Material nachträglich auf den Bootskörper aufgeschweißt wird oder weitere Elemente angebracht werden. Solche beanspruchten Bereiche sind insbesondere im Bootskörper vorgesehene Griffe oder im Bootskörper vorgesehene Öffnungen zum Befestigen eines Taus. In anderen Bereichen, in denen eine Instabilität im Allgemeinen nicht unmittelbar zu einer Zerstörung des Bootskörpers führt, wird diese Instabilität oft aus Kostengründen in Kauf genommen.

Bei einem Bootskörper eines Wassersportgerätes, wie z.B. dem Bootskörper eines Kanus, werden beim Stand der Technik Griffausformungen und Lenzstopfenausbildungen nachträglich durch zusätzliches Aufbringen von Material verstärkt. Insbesondere bei Kanus ist ein Süllrand um die Einstiegsöffnung herum vorgesehen, an dem dann eine Spritzdecke befestigt wird. Dieser Süllrand wird entweder durch das Anbringen von Profilen verstärkt oder wird bewusst instabil gelassen. Bei einem instabilen Süllrand wird jedoch ein Abrutschen der Spritzdecke nicht sicher verhindert. Ferner müssen zusätzliche Formteile zum Anbringen einer Rückenstütze und zum Realisieren von Schenkelabstützungen nachträglich eingebaut und befestigt werden.

Dokument US 4 980 112 zeigt ein Verfahren nach dem Oberbegriff des Anspruchs 1. Dokument US 5 275 121 beschreibt die Herstellung eines Bootes mit einer flexiblen Außenhaut unter Verwendung eines Rotationsgießverfahrens.

Aufgabe der Erfindung ist es, ein Verfahren und eine Vorrichtung anzugeben, durch die ein Bootskörper eines Wassersportgerätes bereits weitgehend vollständig in einem thermoplastischen Formverfahren herstellbar ist und nur relativ geringe Nacharbeiten zum Fertigstellen des Bootskörpers erforderlich sind.

Diese Aufgabe wird gemäß einem ersten Aspekt der Erfindung durch ein Verfahren mit den Merkmalen des Anspruchs 1 gelöst. Vorteilhafte Weiterbildungen der Erfindung sind in den abhängigen Patentansprüchen angegeben.

Durch ein solches Verfahren nach der Erfindung ist auf einfache Art und Weise ein zweifarbig gestalteter Bootskörper eines Wassersportgerätes herstellbar. Arbeiten zum Verbinden eines oberen Bootskörperteils und eines separaten unteren Bootskörperteils entfallen. Durch den Entfall einer Verbindungsstelle zwischen dem oberen und dem unteren Teil des Bootskörpers werden mögliche Leckstellen vermieden. Weiterhin ist ein zweifarbiger Bootskörper mit Hilfe des erfindungsgemäßen Verfahrens einfach, schnell und kostengünstig herstellbar. Eine nachträgliche Beschichtung des Bootskörpers zur farblichen Gestaltung ist nicht mehr unbedingt erforderlich.

Zum besseren Verständnis der vorliegenden Erfindung wird im Folgenden auf die in den Zeichnungen dargestellten bevorzugten Ausführungsbeispiele Bezug genommen, die an Hand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und den Verfahren sowie derartige weitere Anwendungen der Erfindung, wie sie darin aufgezeigt sind, als übliches derzeitiges oder künftiges Fachwissen eines zuständigen Fachmanns angesehen werden. Die Figuren zeigen Ausführungsbeispiele der Erfindung, nämlich:
- Fig. 1: eine Draufsicht auf einen erfindungsgemäßen Bootskörper eines Kanus;
- Fig. 2: eine Seitenansicht des Kanus nach Fig. 1 in einer verkleinerten Darstellung;
- Fig. 3: eine Schnittdarstellung eines Längsschnitts durch den hinteren Endbereich des Kanus nach Fig. 2 in einer vergrößerten Darstellung;
- Fig. 4: eine perspektivische Draufsicht auf die Unterseite eines vorgefertigten Süllrahmens zum Herstellen eines Bootskörpers nach den Fig. 1 und 2;
- Fig. 5: eine vergrößerte Darstellung eines Ausschnitts des Süllrahmens nach Fig. 4;
- Fig. 6: eine Schnittdarstellung eines Querschnitts des Süllrahmens nach den Fig. 4 oder 5 entlang der Schnittlinie A-A nach Fig. 5;
- Fig. 7: eine perspektivische Draufsicht auf die Oberseite des Süllrahmens nach Fig. 4; und
- Fig. 8: eine vergrößerte Darstellung eines Ausschnitts des Süllrahmens nach Fig. 7.

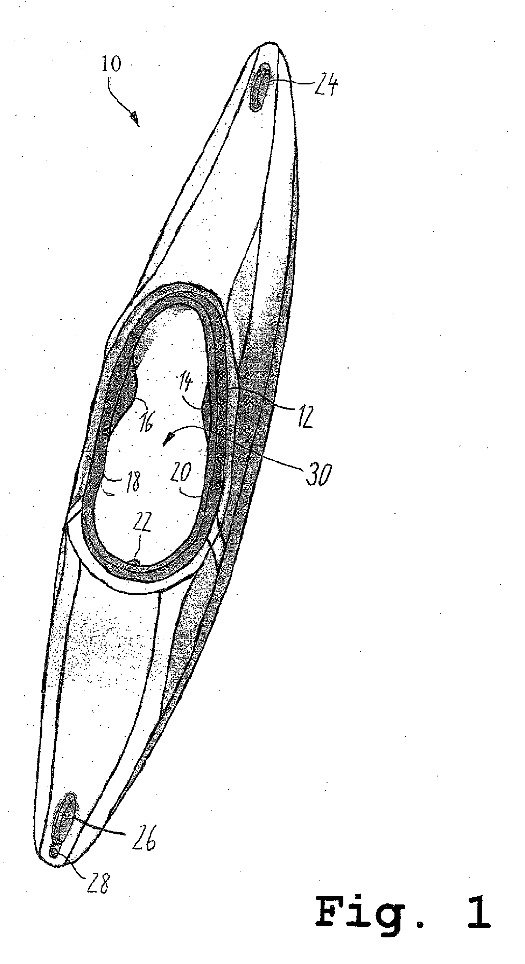

In Fig. 1 ist ein erfindungsgemäßer Bootskörper 10 eines Kanus dargestellt, der aus thermoplastischem Kunststoff in einem Blasformverfahren hergestellt ist. Der Bootskörper 10 hat einen Süllrahmen 12 mit angeformten Schenkelabstützelementen 14, 16, mit angeformten Sitzverstellungsanordnungen 18, 20 und mit einer im Süllrahmen 12 integrierten Anordnung zur Rückenstützenfixierung 22. Ferner sind Transportgriffe 24, 26 und eine Aufnahmeöffnung 28 für einen Lenzstopfen im Bootskörper 10 vorgesehen. Sowohl das Griffelement 24, das einstückig mit der Lenzstopfenöffnung 28 ausgebildete Griffelement 26 und der Süllrahmen 12 sind bereits vor dem Blasvorgang in der Blasform angeordnet worden. Vorzugsweise sind in der Blasform Vertiefungen vorgesehen, in die das Griffelement 24, der Süllrahmen 12 und das Griffelement 26 mit der Lenzstopfenöffnung 28 eingelegt werden. Vorzugsweise werden diese in die Öffnung eingelegten Elemente 12, 24, 26 dort mit geeigneten Mitteln fixiert. Diese eingelegten Elemente 12, 24, 26 werden vor dem Blasvorgang vorzugsweise in der Blasform vorgewärmt. Anschließend wird ein Vorformling in die Blasform eingebracht und aufgeblasen, so dass sich an der Innenwand der Blasform bzw. um die in die Blasform eingelegten Elemente 12, 24, 26 herum eine im Wesentlichen gleichmäßig starke blasgeformte Kunststoffschicht ausbildet.

Das so blasgeformte Element berührt während des Formvorgangs zumindest einen Bereich der Oberfläche der Elemente 12, 24, 26, wodurch zumindest diese berührten Oberflächenbereich dieser Elemente 12, 24, 26 mit dem im Blasformverfahren gebildeten Blasformteil vorzugsweise durch Verschmelzen stoffschlüssig verbunden sind. Dieser Schmelzvorgang wird insbesondere durch das Vorheizen der eingelegten Elemente 12, 24, 26 begünstigt. Durch die Vorheiztemperatur kann der Verschmelzungsgrad zwischen dem blasgeformten Element und den in die Blasform eingelegten Elementen 12, 24, 26 eingestellt werden. Dadurch können auch Elemente 12, 24, 26 am Bootskörper 10 ausgebildet werden, die allein im Blasformvorgang nicht oder nicht mit den gewünschten Eigenschaften herstellbar sind.

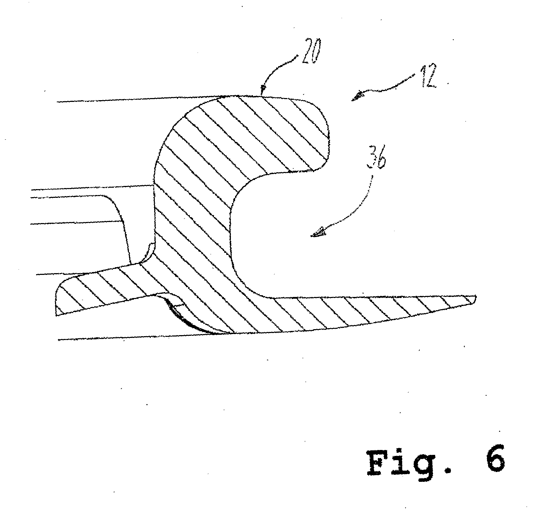

Der Süllrahmen 12 ist um eine Einstiegsöffnung 30 des Bootskörpers 10 herum angeordnet, wobei eine seitliche umlaufende Nut 36 im Süllrahmen 12 vorgesehen ist, die in der in Figur 6 gezeigten Schnittdarstellung des Süllrahmens 12 gezeigt ist. In diese Nut 36 kann zum Abdichten der Einstiegsöffnung 30 zu einem aus der Einstiegsöffnung 30 ragenden Körper einer Person eine umlaufende Spritzdecke, die auch als Persenning bezeichnet wird, eingelegt und gesichert werden. Vorzugsweise ist die Persenning schlauchförmig, wobei ein Schlauchende mit Hilfe eines vorgespannten Gummirings in der Nut 36 gehalten wird. Am anderen Schlauchende kann ein weiterer vorgespannter Gummiring vorgesehen sein, der dieses Schlauchende an den aus der Einstiegsöffnung 30 ragenden Körper drückt und dadurch zum Körper hin abdichtet. Der oberhalb der Nut 36 ausgebildete Vorsprung wird auch als Süllrand bezeichnet.

Das Profil des Süllrahmens 12 ist im so genannten Extrusions-Pressverfahren und die Griffelemente 24, 26 sind einem Spritzgussverfahren hergestellt. Der Süllrahmen 12 und die Elemente 24, 26 sind vorzugsweise aus dem gleichen thermoplastischen Werkstoff wie der Bootskörper 10 hergestellt, beispielsweise einem Polyethylen-Werkstoff. Der Süllrahmen 12 ist vorzugsweise als Vollprofil ausgebildet, wodurch eine hohe Steifigkeit im Bereich um die Einstiegsöffnung 30 herum erreicht wird. Durch das Extrusions-Pressverfahren und das Spritzgussverfahren ist eine hohe Gestaltungsfreiheit der durch diese Verfahren gefertigten Elemente 12, 24, 26 gegeben. Vorzugsweise sind alle Elemente des Bootskörpers 10, die einer hohen Krafteinwirkung ausgesetzt sind bzw. einer hohen Krafteinwirkung eingesetzt sein können, im Extrusions-Pressverfahren, im Spritzgußverfahren oder einem anderen geeigneten Formverfahren hergestellt und werden als Einlegeteil in die Blasform eingelegt. Das Extrusions-Pressverfahren ermöglicht ferner, dass weitere Elemente, wie die Schenkelstützelemente 14, 16, die Sitzverstellungselemente 18, 20 und das Rückenstützenfixierungselement 22, direkt am bzw. im Süllrahmen 12 angeformt sind.

Beim Stand der Technik müssen diese Elemente 14 bis 22 aufwendig als Einzelteile hergestellt und in relativ aufwendigen Fertigungsverfahren am blasgeformten Bootskörper 10 einzeln angebracht werden. Jedoch ist das Verbinden solcher Elemente 14 bis 22 mit dem Bootskörper 10 problematisch, da insbesondere der Bootskörper 10 durch das Einbringen von Verbindungselementen, wie Schrauben oder Nieten, durch das Anlösen des Bootskörpers 10 mit Klebstoff oder die Materialveränderungen beim nachträglichen Verschweißen des Bootskörpers 10 mit den weiteren Elementen 14 bis 22 beschädigt werden kann. Das erfindungsgemäße Verfahren zum Herstellen des Bootskörpers 10 ist demgegenüber wesentlich kostengünstiger, wobei auch die Qualität des Bootskörpers 10 und die Gebrauchseigenschaften des kompletten Bootes wesentlich verbessert sind.

Im Bootskörper 10 muss zum Entfernen von in den Bootskörper 10 eingedrungenem Wasser eine Lenzöffnung vorgesehen sein, die vorzugsweise an einem Ende des Bootskörpers 10 vorgesehen ist. Mit Hilfe der Lenzöffnung 28 ist eine einfache Entfernung von im Bootskörper 10 vorhandenen Wasser möglich ist. Die Enden von geeigneten Bootskörperformen sind jedoch üblicherweise schwer zugänglich, da diese Enden spitz zulaufen. Dadurch kann beim Stand der Technik in diesen Endbereichen nur relativ schwierig und aufwendig Material von innen zur Verstärkung eines blasgeformten Bootskörpers 10 eingebracht werden, um eine verstärkte Lenzöffnung 28 auszubilden, in die ein üblicher Lenzstopfen eingebracht werden kann, der die Lenzöffnung 28 zuverlässig abgedichtet wird.

Erfindungsgemäß wird das Griffelement 26 zusammen mit der Lenzöffnung 28 als ein Bauteil im Spritzgussverfahren hergestellt. Wie bereits erwähnt, wird dieses Bauteil in die Blasform vor dem Blasvorgang eingelegt, wodurch auch dieses Bauteil während des Blasvorgangs mit dem Blasformteil verschmolzen und somit verschweißt wird.

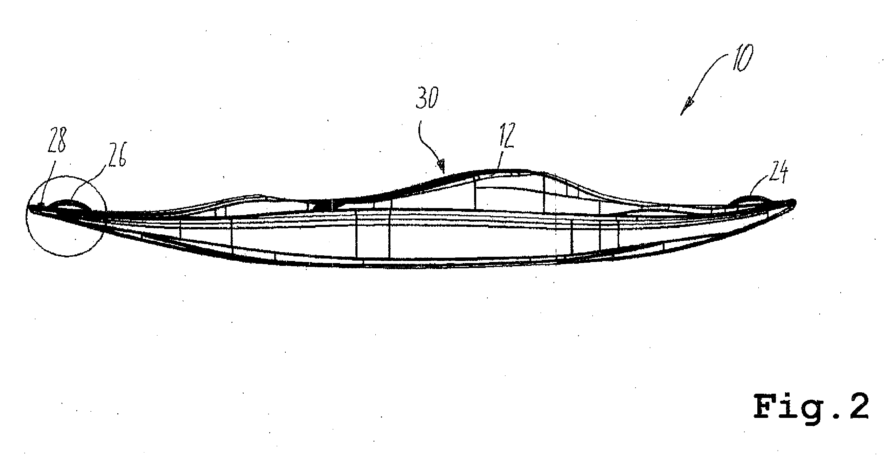

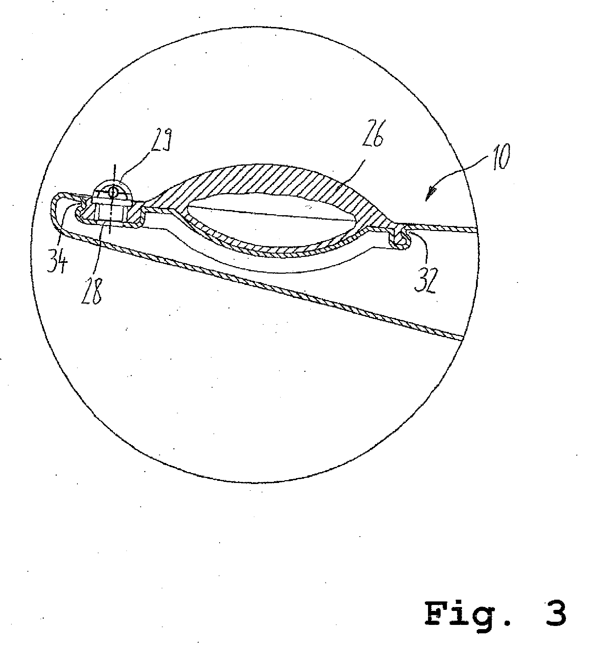

In Fig. 2 ist eine Seitenansicht des Bootskörpers 10 nach Fig. 1 dargestellt. Gleiche Elemente haben gleiche Bezugszeichen. Eine Schnittdarstellung des in Fig. 2 mit einem Kreis umrandeten Bereichs ist in Fig. 3 in einer vergrößerten Schnittdarstellung detailliert dargestellt. Der im Blasformverfahren gefertigte Blaskörper ist in Fig. 3 mit einer Schraffur von links oben nach rechts unten dargestellt und das spritzgegossene Bauteil mit dem Griffelement 26 und der Lenzöffnung 28 ist mit einer Schraffur von linken unten nach rechts oben dargestellt. Das spritzgegossene Bauteil hat hinterschnittene Bereiche 32, 34, die vom Blaskörper umschlossen werden, so dass zusätzlich oder alternativ zum Verschweißen des Blaskörpers mit dem spritzgegossenen Bauteil eine formschlüssige Verbindung hergestellt wird.

Das spritzgegossene Bauteil mit dem Griffelement 26 und der Lenzstopfenöffnung 28 ist somit sowohl stoffschlüssig durch das Verschweißen des blasgeformten Elementes mit dem spritzgegossenen Element als auch durch eine formschlüssige Verbindung durch den Eingriff des blasgeformten Elementes in die hinterschnittenen Bereiche 32, 34 verbunden. In Fig. 3 ist ferner ein Lenzstopfen 29 in der Lenzstopfenöffnung 28 vorhanden, durch den die Lenzstopfenöffnung 28 abgedichtet ist.

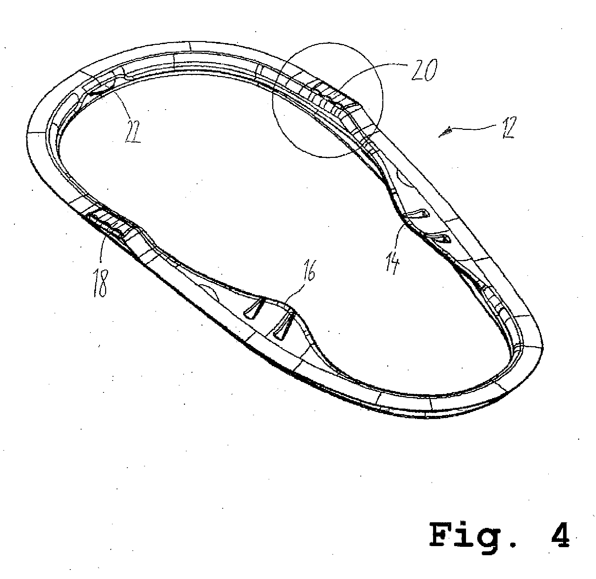

In Fig. 4 ist eine perspektivische Draufsicht die Unterseite des Süllrahmens 12 dargestellt. Wie bereits im Zusammenhang mit Fig. 1 erwähnt, bildet der Süllrahmen 12 einen stabilen Rahmen um die Einstiegsöffnung 30, der dem Bootskörper 10 um die Einstiegsöffnung 30 herum stabilisiert. Das Rückenstützenfixierungselement 22, die Sitzverstellungselemente 18, 20 und die Schenkelabstützelemente 14, 16 sind in Fig. 4 detaillierter dargestellt.

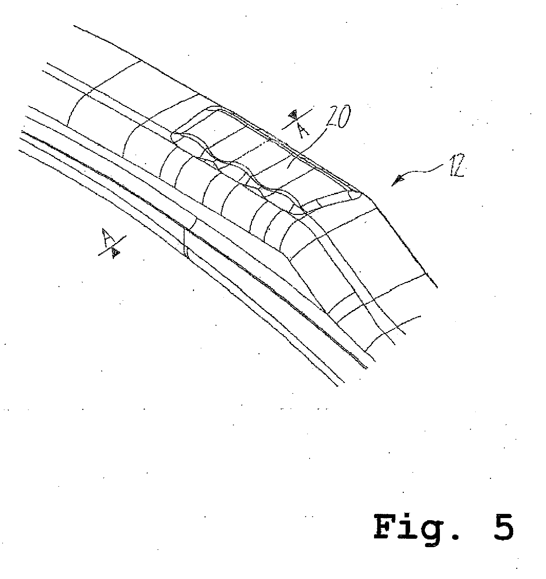

In Fig. 5 ist eine detaillierte Darstellung des in Fig. 4 von dem Kreis eingeschlossenen Bereichs des Süllrahmens 12 dargestellt. Insbesondere ist in Fig. 5 die Ausbildung des Sitzverstellungselementes 18 am Süllrahmen 12 detailliert dargestellt, in der Vertiefungen sichtbar sind, die als Raster zum Positionieren und Befestigen eines Sitzes dienen.

In Fig. 6 ist eine Schnittdarstellung des Süllrahmens 12 durch die Schnittebene A-A nach Fig. 5 durch das am Süllrahmen ausgebildete Sitzverstellungselement 18 hindurch dargestellt. Der Süllrahmen 12 hat eine seitlich umlaufende Nut 36, in die, wie bereits erwähnt eine umlaufende Schwitzwasserpersenning eingreifen kann. Alternativ zu dem bereits erwähnten vorgespannten Gummiring kann die Persenning auch mit Hilfe einer Verschnürung vor dem Herausgleiten aus der Nut 36 gesichert werden.

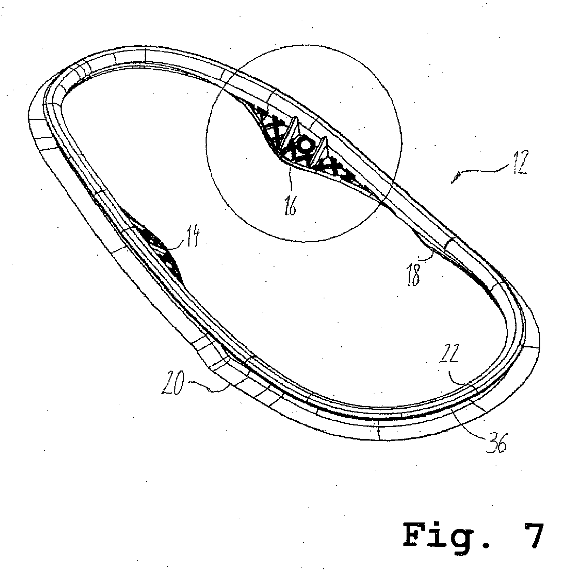

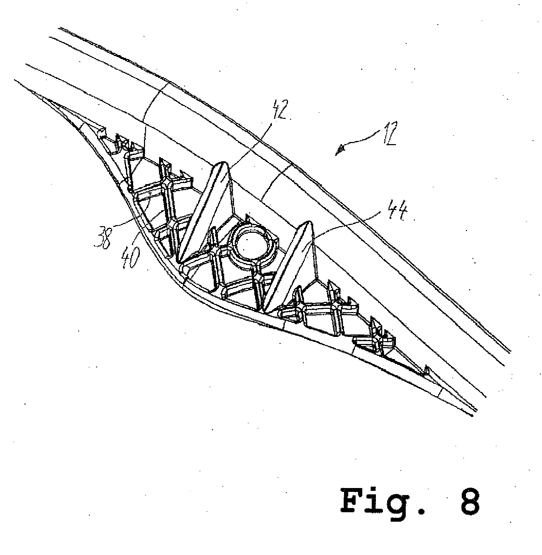

In Fig. 7 ist eine perspektivische Ansicht der Oberseite des Süllrahmens 12 dargestellt. In Fig. 8 ist der in Fig. 7 mit Hilfe eines Kreises markierte Bereich des Süllrahmens 12 in einer vergrößerten Darstellung gezeigt. Dieser Bereich umfasst das Schenkelabstützelement 16. Die Schenkelabstützelemente 14, 16 haben an der Oberseite gitterartig angeordnete Versteifungselemente, von denen zwei mit den Bezugszeichen 38, 40 bezeichnet sind. Ferner sind weitere Versteifungselemente 42, 44 vorgesehen, die ein Abknicken des vom Süllrahmen 12 nach innen zur Einstiegsöffnung 30 hin vorstehenden Schenkelabstützelementes 16 auch bei relativ großer Krafteinwirkung verhindern.

Vorzugsweise wird der blasgeformte Bootskörper 10 aus einem mindestens zweischichtigen Vorformling hergestellt, wobei die erste Schicht des Vorformlings einen Werkstoff einer ersten Farbe und die zweite Schicht einen Werkstoff einer zweiten Farbe enthält. Ein solcher Vorformling sowie ein Verfahren und eine Vorrichtung zum Herstellen eines solchen mindestens zweischichtigen Vorformlings ist aus dem Dokument DE 195 45 441 A1 bekannt. Die in diesem Dokument enthaltenen Ausführungen zu dem Vorformling und dem Verfahren sowie der Vorrichtung zum Herstellen eines solchen Vorformlings werden hiermit durch Bezugnahme in die vorliegende Beschreibung aufgenommen.

Der mindestens zweischichtige Vorformling wird derart in die Blasform eingebracht, dass der Bootskörper 10 nach dem Blasvorgang, zumindest die Außenschicht des oberen Teils des Bootskörpers 10 die erste Farbe hat und zumindest die Außenschicht des unteren Teiles des Bootskörpers 10 die zweite Farbe hat. Dadurch lassen sich sehr einfach und kostengünstig mindestens zweifarbig gestaltete Bootskörper 10 herstellen. Insbesondere bei Wassersportgeräten ist die farbliche Gestaltung des Wassersportgerätes ausschlaggebend für den Kauf und die Beliebtheit eines Wassersportgerätes, so dass eine zweifarbige Gestaltung des Bootskörpers 10 sehr vorteilhaft für das Kundeninteresse und somit für den Verkauf des Wassersportgerätes ist. Ferner ist es vorteilhaft, die Außenschicht des unteren Teiles des Bootskörpers 10 in einer dunklen Farbe vorzusehen und den oberen Teil des Bootskörpers 10 in einer hellen Farbe, da die helle Farbe die Sonnenstrahlen nur gering absorbiert. Verunreinigungen mit im Wasser vorhandenen Partikeln, die sich über einen längeren Zeitraum auf dem im Wasser befindlichen unteren Teils des Bootskörpers 10 ablagern, sind hingegen auf einer dunklen Oberfläche nicht so kontrastreich sichtbar.

Alternativ zum im Ausführungsbeispiel beschriebenen Blasformverfahren können andere geeignete thermoplastischen Formverfahren zum erfindungsgemäßen Verbilden eines thermoplastisch geformten Elements und mindestens einem weiteren Element genutzt werden, wie z.B. ein Rotationsformverfahren, eine Twinsheet-Formverfahren oder eine Tiefziehformverfahren.

Obgleich in den Zeichnungen und in der vorhergehenden Beschreibung bevorzugte Ausführungsbeispiele aufgezeigt und detailliert beschrieben worden sind, sollten sie lediglich als rein beispielhaft und die Erfindung nicht einschränkend angesehen werden. Es wird darauf hingewiesen, dass nur die bevorzugten Ausführungsbeispiele dargestellt und beschrieben sind und sämtliche Veränderungen und Modifizierungen, die derzeit und künftig im Schutzumfang der Erfindung liegen, geschützt werden sollen.

### Bezugszeichenliste

- 10: Bootskörper
- 12, 14: Schenkelabstützelemente
- 16, 18: Sitzverstellungselemente
- 22: Rückenstützenfixierung
- 24,26: Griffelemente
- 28: Lenzöffnung
- 29: Lenzstopfen
- 30: Einstiegsöffnung
- 31: Lenzstopfen
- 32, 34, 36: Hinterschneidung
- 38, 40, 42, 44: Versteigungselemente
- A-A: Schnittebene

## Patentansprüche

1. Verfahren zum Herstellen eines Bootskörpers eines Wassersportgerätes,
bei dem ein mindestens zweischichtiger Vorformling hergestellt wird,
wobei die erste Schicht einen Werkstoff einer ersten Farbe und die zweite Schicht einen Werkstoff einer zweiten Farbe umfasst,
und bei dem der Vorformling derart in eine Form eingebracht und mit Hilfe eines thermoplastischen Formverfahrens geformt wird, dass zumindest die Außenschicht des oberen Teils des Bootskörpers (10) die erste Farbe und zumindest die Außenschicht des unteren Teils des Bootskörpers die zweite Farbe hat.

2. Verfahren nach Anspruch 1, **dadurch gekennzeichnet, dass** in den Bootskörper (10) ein Rahmen (12) und/oder ein weiteres vorgeformtes Element (24, 26) mit Hilfe eines Verfahrens nach einem der Ansprüche 1 bis 15 eingebracht werden.

3. Verfahren nach Anspruch 1 oder 2, **dadurch gekennzeichnet, dass** das Formen des Bootskörpers (10) aus dem Vorformling mit Hilfe eines Blasformverhahrens durchgeführt wird, bei dem der Vorformling derart in der Form fixiert und aufgeblasen wird, dass zumindest die Außenschicht des oberen Teils des Bootskörpers (10) die erste Farbe und zumindest die Außenschicht des unteren Teils des Bootskörpers die zweite Farbe hat.

4. Verfahren nach einem der Ansprüche 1 bis 3, **dadurch gekennzeichnet, dass** das Material des Vorformlings ein thermoplastischer Kunststoff, insbesondere ein Hochdruckpolyethylen oder ein Niederdruckpolyethylen ist.

5. Verfahren nach einem der Ansprüche 1 bis 4, **dadurch gekennzeichnet, dass** das thermoplastische Formverfahren ein Blasformverfahren, ein Twinsheet-Formverfahren oder ein Tiefziehformverfahren ist.
